(19) Europäisches Patentamt
European Patent Office
Office européen des brevets

(11) **EP 3 561 459 B1**

(12) **EUROPÄISCHE PATENTSCHRIFT**

(45) Veröffentlichungstag und Bekanntmachung des Hinweises auf die Patenterteilung:
**15.09.2021 Patentblatt 2021/37**

(51) Int Cl.:
***G01F 23/288*** *(2006.01)*     ***G01N 9/24*** *(2006.01)*
***G01F 25/00*** *(2006.01)*     *G01C 13/00* *(2006.01)*

(21) Anmeldenummer: **18169285.6**

(22) Anmeldetag: **25.04.2018**

(54) **ANORDNUNG UND VERFAHREN ZUR FÜLLSTANDS- BZW. DICHTEMESSUNG EINES MEDIUMS MITTELS MYONEN**

DEVICE AND METHOD FOR MEASURING A MEDIUM FILL LEVEL OR DENSITY BY THE HELP OF MUONS

DISPOSITIF ET PROCÉDÉ DE MESURE DU NIVEAU DE REMPLISSAGE OU DE LA DENSITÉ D'UN MILIEU À L'AIDE DE MUONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.10.2019 Patentblatt 2019/44**

(73) Patentinhaber: **VEGA Grieshaber KG**
**77709 Wolfach (DE)**

(72) Erfinder: **DIETERLE, Levin**
**77709 Oberwolfach (DE)**

(74) Vertreter: **Maiwald Patent- und**
**Rechtsanwaltsgesellschaft mbH**
**Elisenhof**
**Elisenstraße 3**
**80335 München (DE)**

(56) Entgegenhaltungen:
**US-A- 5 218 202**     **US-A1- 2011 035 151**
**US-A1- 2015 108 349**     **US-A1- 2015 279 489**
**US-A1- 2015 287 237**     **US-A1- 2016 170 072**
**US-B1- 7 945 105**

- **S. PROCUREUR: "Muon imaging: Principles, technologies and applications", NUCLEAR INSTRUMENTS & METHODS IN PHYSICS RESEARCH. SECTION A, Bd. 878, 7. September 2017 (2017-09-07), Seiten 169-179, XP055515432, NL ISSN: 0168-9002, DOI: 10.1016/j.nima.2017.08.004**
- **Steven K Sando ET AL: "DETERMINATION OF SEDIMENT THICKNESS AND VOLUME IN LAKE BYRON, SOUTH DAKOTA, USING CONTINUOUS SEISMIC-REFLECTION METHODS, MAY 1992", , 1994, XP055516941, Gefunden im Internet: URL:https://pubs.usgs.gov/wri/1993/4206/re port.pdf [gefunden am 2018-10-18]**
- **William S.L. Banks ET AL: "Scientific Investigations Report 2011-5223 Maryland Department of Natural Resources Collection, Processing, and Interpretation of Ground-Penetrating Radar Data to Determine Sediment Thickness at Selected Locations in Deep Creek Lake", , 2011, XP055516957, Gefunden im Internet: URL:https://md.water.usgs.gov/publications /sir-2011-5223/sir2011-5223.pdf [gefunden am 2018-10-18]**

EP 3 561 459 B1

## Beschreibung

### Gebiet der Erfindung

Die Erfindung betrifft die Füllstands- bzw. Dichtemessung mittels Myonen. Insbesondere betrifft die Erfindung eine Myonen-Füllstandmessanordnung zur Bestimmung eines Füllstandes oder einer Dichte eines Mediums in einem Behälter, die Verwendung einer Myonen-Füllstandmessanordnung zur Bestimmung des Sedimentationsgrades eines Stausees, die Verwendung einer Myonen-Füllstandmessanordnung zur Bestimmung eines Füllstandes oder einer Dichte eines Mediums in einem Behälter, ein Verfahren zur Bestimmung eines Füllstandes oder einer Dichte eines in einem Behälter befindlichen Mediums, ein Programmelement sowie ein computerlesbares Medium.

### Tcchnologischer Hintergrund

In der modernen Füllstands/Grenzstands- bzw. Dichtemesstechnik werden häufig radiometrische Messgeräte verwendet, die aus einer radioaktiven Strahlenquelle in Form eines Gammastrahlers (z.B. $^{60}$Co oder $^{137}$Cs) und einem gegenüberliegenden Szintillator zur Detektion der den Behälter durchlaufenden Gammastrahlen bestehen.

Der Platzbedarf beim Anbau des radiometrischen Messgeräts ist relativ groß. Zur Abschirmung der radioaktiven Gammastrahlung ist ein Strahlenschutzbehälter vorgesehen, der die Strahlung während des Betriebs nur in Richtung des Szintillators austreten lässt. Das Justieren des radioaktiven Strahlers zum Anpassen auf den gegenüberliegenden Szintillator ist oft zeitaufwändig und es gibt erhebliche sicherheitstechnische Auflagen für den Betrieb des Strahlers.

US 2011/035151 A1 beschreibt ein System und ein Verfahren zur Durchführung unterirdischer Kernmessungen für eine Dichtemessung, wobei das System mehrere längliche Szintillatorelemente, eine optische Detektoreinheit und ein Gehäuse umfasst.

US 2015/279489 A1 offenbart ein Verfahren und ein System zur nicht-invasiven Abbildung eines Reaktorkerns in einem Kernreaktor mit Kernbrennstoff mittels Myon-Arraydetektoren.

US 2015/0108349 A1 beschreibt ein Myon-Tomographie-basierendes Screeningsystem, das eingerichtet ist, in Anschluss an ein erstes Bedrohungsalarm-Auflösungssystem durch die Streuungsdetektion von Myonen mittels eines Array-Detektors über High-Z-Materialien in einer Fracht zu alarmieren.

US 2016/0170072 A1 beschreibt eine Methode zur Detektion von Materialien mit hohem Atomgewicht in einem Volumen wie z. B. in einem LKW oder einem Frachtcontainer.

US 7 945 105 B1 offenbart eine computerautomatisierte Methode zur Erkennung von potenziellen Bedrohungsobjekte durch dreidimensionale Myon-Tomographie-Technik und der Datenmodellierungstechnik.

US 2015/0287237 A1 beschreibt ein Verfahren zur Abbildung von Ladungsteilchen in einem interessierenden Volumen durch ein Ladungsteilchen-Tomographiesystem.

### Zusammenfassung der Erfindung

Es ist eine Aufgabe der Erfindung, eine vereinfachte und zuverlässige Füllstandmessanordnung zur Detektion eines Füllstandes oder einer Dichte eines Mediums zu schaffen, welche auf eine radioaktive Strahlenquelle verzichtet.

Es sind eine Myonen-Füllstandmessanordnung zur Detektion eines Füllstandes oder einer Dichte eines Mediums in einem Behälter, eine Verwendung einer Myonen-Füllstandmessanordnung zur Bestimmung eines Sedimentationsgrades oder eines Füllstandes oder einer Dichte eines Mediums in einem Behälter, ein Verfahren zur Bestimmung eines Füllstandes oder einer Dichte eines in einem Behälter befindlichen Mediums, ein Programmelement sowie ein computerlesbares Medium gemäß den Merkmalen der unabhängigen Ansprüche angegeben. Weiterbildungen der Erfindung ergeben sich aus den Unteransprüchen.

Die beschriebenen Ausführungsformen betreffen gleichermaßen die Messanordnung, die Verwendung, das Verfahren, das Programmelement und das computerlesbare Medium. In anderen Worten lassen sich die Merkmale, die im Folgenden im Hinblick auf die Messanordnung beschrieben werden, auch in der Verwendung, dem Verfahren, dem Programmelement und dem computerlesbaren Medium implementieren, und umgekehrt.

Gemäß einer ersten Ausführungsform ist eine Füllstandmessanordnung zur Detektion eines Füllstandes oder einer Dichte eines Mediums in einem Behälter angegeben, welche eine Detektoranordnung bzw. Strahlungsdetektoranordnung und eine Auswerteeinheit bzw. Auswerteschaltung umfasst. Die Strahlungsdetektoranordnung ist zur richtungsselektiven Detektion sekundärer kosmischer Strahlung ausgeführt und weist hiermit einen oder mehrere richtungsselektive Detektoren oder Detektoranordnungen auf.

Bei der einfallenden sekundären kosmischen Strahlung kann es sich vornehmlich um hochenergetische Myonen handeln, die in der oberen Atmosphäre durch Kollision hochenergetischer kosmischer Strahlung (hauptsächlich Protonen) mit Atomen und Molekülen der Atmosphäre als sekundäre Teilchen erzeugt werden. Durch ein einziges primäres Teilchen der kosmischen Strahlung wird ein Teilchenschauer mit bis zu $10^{11}$ sekundären Teilchen (unter anderem Myonen) erzeugt. Myonen besitzen eine hohe Masse (ca. 200x schwerer als ein Elektron) und aufgrund ihrer Energie ein hohes Durchdringungsvermögen für Materie. Mit einer Energie von wenigen hundert MeV bis hin zu mehreren hundert TeV sind Myonen im Labormassstab kaum bis gar nicht abschirmbar. Myonen verlieren beim Durchgang durch Materie aufgrund von Ionisierung und Strahlungsverlusten entlang ihrer Trajektorie in Abhängigkeit von der Materiedichte Energie. Für Myonen mit Energien unter einigen hundert GeV beträgt dieser Energieverlust etwa

$$\frac{dE}{dx}\frac{1}{\rho} = 1{,}4 \text{ MeV} \frac{\text{cm}^2}{\text{g}}$$

.

Im Gegensatz zu niederenergetischen Myonen, die während ihres Durchgangs durch Materie ihre Energie vollständig verlieren und zerfallen, lassen sich hochenergetische Myonen nach ihrem Durchgang durch Materie durch eine Detektoranordnung detektieren. Die Veränderung der Myonen-Zählrate nach dem Durchgang durch ein zu messende Medium wird im Vergleich zu einer gemessenen Referenzzählrate erfindungsgemäß zur Generierung des Messwertes genutzt.

Die Strahlungsdetektoranordnung kann ein oder mehrere richtungsselektive Detektoren mit jeweils mehreren Szintillatoren aufweisen.

Unter einem richtungsselektiven Detektor versteht man eine Kombination mehrerer Teilchendetektoren, die räumlich derart angeordnet sind, dass mittels Detektion koinzidenter Ereignisse die Trajektorie energiereicher Teilchen, beispielsweise von Myonen, auf einen bestimmten Raumwinkelbereich, der dem Akzeptanzwinkelbereich des richtungsselektiven Detektors entspricht, eingeschränkt werden kann. Im Falle der Erfindung handelt es sich um mehrere räumlich getrennte Szintillatoren, deren Material beim Durchgang energiereicher Photonen oder geladenen Teilchen durch Stoßprozesse angeregt und die Anregungsenergie in Form von Licht (meist im Ultravioletten- oder sichtbaren Bereich) wieder abgegeben wird. Somit wird zumindest ein Teil der Energie des einfallenden Teilchens in Licht umgewandelt. Als Szintillator-Material kann beispielsweise ein organischer Werkstoff (bspw. Polystyrol), ein anorganischer Werkstoff (bspw. Natriumiodid) oder eine Flüssigkeit (bspw. Wasser) in einem entsprechenden Behältnis verwendet werden.

Der im Szintillator durch die einfallende Strahlung erzeugte Lichtblitz wird durch einen entsprechenden Sensor, beispielsweise eine Photoelektronenvervielfacher-Röhre (PMT) oder ein Silizium-Photomultiplier (SiPM) detektiert und in ein elektrisches Signal, bspw. Spannungs- oder Strompuls, umgewandelt.

Unter einem koinzidenten Ereignis versteht man zwei annährend gleichzeitig detektierte Ereignisse (Lichtpulse) bzw. zwei Ereignisse, welche innerhalb eines sehr kurzen Zeitintervalls, z. B. von wenigen Nanosekunden, auf unterschiedlichen Szintillatoren des Detektors registriert werden und somit einem einzigen Teilchen zugeordnet werden kann. Der Vorteil der Messung von Koinzidenzereignissen besteht darin, dass auf diese Weise natürliche und künstliche Hintergrundstrahlung, welche aus hochenergetischen γ-Quanten bestehen, herausgefiltert werden kann, weil diese beim Auftreffen auf einen Szintillator durch Wechselwirkung mit dessen Materie vollständig absorbiert werden und somit keine weiteren Ereignisse auf weiteren Szintillatoren erzeugen können. Somit ist es aufgrund der beobachteten niedrigen Zählrate natürlicher Hintergrundstrahlung extrem unwahrscheinlich, dass koinzidente Ereignisse durch γ-Quanten der natürlichen Hintergrundstrahlung erzeugt werden. Somit kann durch Einschränkung der Messung auf koinzidente Ereignisse der Einfluss von natürlicher Hintergrundstrahlung auf die detektierte Zählrate eliminiert werden.

Durch die Erfassung von Koinzidenzereignissen ist die Strahlungsdetektoranordnung als richtungsselektiver Detektor ausgeführt. Es ist möglich, den Akzeptanzwinkelbereich der Detektoranordnung für den Nachweis einfallender Teilchen je nach Geometrie (Größe und Bauform) und Anordnung der Szintillatoren (Abstand und relative Ausrichtung) zu verändern bzw. einzuschränken. Mittels einer Strahlungsdetektoranordnung, bestehend aus nur einem einzelnen Szintillator ist die richtungsselektive Erfassung von Teilchen nicht bzw. nur in sehr begrenztem Maße möglich.

Insbesondere ist die Strahlungsdetektoranordnung zur Bestimmung einer ersten Myonen-Zählrate, welche nicht durch ein zu messendes Medium beeinflusst wird und als Referenz dient und einer zweiten Myonen-Zählrate, die aufgrund der Dichte und Füllhöhe des zu messenden Mediums entsprechend beeinflusst wird, ausgeführt.

Vorteilhaft können hiermit Änderung in Myonen-Flussrate, verursacht beispielsweise durch Veränderung der atmosphärischen Bedingungen, wie z. B. Luftdruck, Luftfeuchte usw., auf die Messergebnisse durch Verwendung einer Referenzmessung eliminiert werden. Da die Myonen-Flussrate zusätzlich von der absoluten Höhe über Meeresniveau abhängig ist, kann somit auch der Einfluss der absoluten Höhe der Messanordnung über Meeresniveau ebenfalls eliminiert werden.

Insbesondere ist die Auswerteeinheit bzw. die Auswerteschaltung zur Berechnung eines Füllstandes oder der Dichte eines Mediums aus einer ersten und einer zweiten Myonen-Zählrate ausgelegt. Die hierbei erreichbare Genauigkeit ist direkt von der Messzeit und Detektorgeometrie abhängig, da diese maßgeblich die erfasste Zählrate beeinflussen.

Des Weiteren weist die Füllstandmessanordnung einen richtungsselektiven Detektor auf, dessen Zählrate nicht durch ein zu messendes Medium beeinflusst wird und als Referenz dient, sowie jeweils mindestens einen weiteren zusätzlichen richtungsselektiven Detektor, dessen Zählrate durch ein zu messendes Medium beeinflusst wird. Eine entsprechende Auswerteelektronik ist dazu ausgelegt, aus der ermittelten Referenzzählrate und zumindest einer weiteren Zählrate die Füllhöhe oder Dichte eines Mediums in einem Behälter zu bestimmen. Somit ist es möglich eine Referenzzählrate für eine Vielzahl von Messungen an mehreren Behältern / Positionen zu verwenden.

Weiterhin weist die Auswerteschaltung eine Diskriminatoreinheit, eine Koinzidenzeinheit, eine Ereigniszähleinheit und eine Auswerteelektronik auf.

Gemäß einer weiteren Ausführungsform weist die Strahlungsdetektoranordnung zwei richtungsselektive Detektoren bestehend aus drei räumlich getrennten Szintillatoren mit länglicher Geometrie auf. Die Hauptachsen (Richtung der größten räumlichen Ausdehnung) der drei Szintillatoren, nämlich ein erster Szintillator, ein zweiter Szintillator und ein dritter Szintillator, sind parallel und liegen nicht in einer Ebene. Auf diese Weise ist der erste richtungsselektive Detektor eingerichtet und ausgeführt, erste Myonen, welche nicht durch das zu messende Medium beeinflusst werden und koinzidente Signale auf dem zweiten und dritten Szintillator erzeugen, zu detektieren; der zweite richtungsselektive Detektor ist eingerichtet und ausgeführt, zweite Myonen, die den Behälter durchlaufen und eine gewisse Energie durch Wechselwirkung mit dem Behälter und sich darin befindlichen Medium verloren haben und koinzidente Signale auf dem ersten und zweiten Szintillator erzeugen, zu detektieren . Somit ist der zweite Szintillator sowohl Teil des ersten als auch zweiten richtungsselektiven Detektors.

Gemäß einer weiteren Ausführungsform ist die Auswerteeinheit bzw. Auswerteschaltung zur Detektion einer ersten Teilchen-Zählrate oder Myonen-Zählrate, welche nicht durch das zu messende Medium beeinflusst wird und als Referenz dient, sowie einer zweiten Teilchen- oder Myonen-Zählrate, welche durch das zu messende Medium beeinflusst wird, eingerichtet. Die Detektion der ersten Myonen-Zählrate basiert auf der Zählung von Koinzidenzereignissen auf dem ersten und dem zweiten Szintillator; die Detektion der zweiten Myonen-Zählrate basiert auf der Zählung von Koinzidenzereignissen auf dem zweiten und dem dritten Szintillator der Detektoranordnung.

Gemäß einer weiteren Ausführungsform ist die Diskriminatoreinheit zur Abtrennung der von der Strahlungsdetektoranordnung detektierten Nutzsignale von Störsignalen eingerichtet. Störsignale können sich beispielsweise aus dem Dunkelstrom des Photoelektronenvervielfachers oder dem Rauschen des Silizium-Photomultipliers ergeben.

Gemäß einer weiteren Ausführungsform ist die Koinzidenzeinheit zur Detektion der Koinzidenzereignisse eines Myonen-Einfallens eingerichtet, wobei die Detektion der Koinzidenzereignisse von den ersten Myonen bei einem Myonen-Einfall auf ein erstes Paar der drei Szintillatoren erfolgt und die Detektion der Koinzidenzereignisse von den zweiten Myonen bei einem Myonen-Einfall auf ein zweites Paar der drei Szintillatoren erfolgt.

Die an die Koinzidenzeinheit angeschlossene Ereigniszähleinheit ist zur Erfassung oder Zählung der Koinzidenzereignisse des Myonen-Einfalls eingerichtet, um die Zählraten $N_1$ und $N_2$ der detektierten Koinzidenzereignisse zu ermitteln.

Gemäß einer weiteren Ausführungsform ist die Ereigniszähleinheit dazu eingerichtet, innerhalb eines einstellbaren Zeitintervalls, die Anzahl koinzidenter Ereignisse des ersten richtungsselektiven Detektors zu zählen und so eine erste Teilchenzählrate $N_1$ zu bestimmen, und die Anzahl koinzidenter Ereignisse des zweiten richtungsselektiven Detektors zu zählen und so eine zweite Teilchenzählrate $N_2$ zu bestimmen.

Gemäß einer weiteren Ausführungsform ist die Auswerteelektronik zum Auswerten und Vergleich der durch die Ereigniszähleinheit ermittelten Zählraten $N_1$ und $N_2$ der detektierten Koinzidenzereignisse eingerichtet. Die Auswerteelektronik ist dabei ausgeführt, den Füllstand oder die Dichte des im Behälter befindlichen Mediums durch den Vergleich der beiden Zählraten $N_1$ und $N_2$ zu ermitteln.

Gemäß einem weiteren Aspekt ist Verwendung einer Myonen-Füllstandmessanordnung zur Bestimmung des Sedimentationsgrades eines Stausees angegeben. Die Messanordnung weist zwei richtungsselektive Detektoren auf, welche auf unterschiedlichen Höhen über dem Grund des Stausees, seitlich an der Staumauer gegenüber dem Stausee angebracht sind. Der erste richtungsselektive Detektor bestimmt eine erste Myonen-Zählrate $N_1$, welche lediglich von dem Wasserpegel im Stausee abhängig ist. Diese Zählrate dient als Referenz. Der zweite richtungsselektive Detektor, welcher unterhalb des ersten angebracht ist, wird zur Bestimmung einer zweiten Myonen-Zählrate $N_2$ verwendet. Diese ist sowohl von der Höhe des Wasserpegels, als auch von der Höhe der Sedimentationsschicht abhängig. Mittels der Messanordnung wird die Höhe H der Sedimentationsschicht anhand der durch die Strahlungsdetektoranordnung bestimmten Zählraten $N_1$ bzw. $N_2$ von einer Auswerteeinheit ermittelt. Mit Kenntnis der Abhängigkeit der beiden Zählraten $N_1$ und $N_2$ von der Höhe des Wasserpegels $H_w$ kann somit der Einfluss eines variierenden Wasserpegels in vorteilhafter Weise eliminiert werden.

Alternative ist Verwendung einer Myonen-Füllstandmessanordnung zur Bestimmung des Sedimentationsgrades eines Stausees angegeben, wobei diese aus zwei richtungsselektiven Detektoren gebildet wird, welche aus insgesamt drei räumlich getrennten Szintillatoren gebildet werden. Die Ausrichtung des Akzeptanzbereichs zur Detektion sekundärer kosmischer Strahlung der beiden richtungsselektiven Detektoren unterscheidet sich hierbei im Zenitwinkel.

Gemäß einem weiteren Aspekt ist die Verwendung einer Myonen-Füllstandmessanordnung zur Bestimmung eines Füllstandes oder einer Dichte eines Mediums in einem Behälter, einer Schütthalde oder einem Fluss ausgeführt.

Gemäß einem weiteren Aspekt ist die Verwendung einer Füllstandmessanordnung als Grenzschalter, welcher bei Über- oder Unterschreitung eines gewissen Zählratenverhältnisses $N_1/N_2$ seinen Schaltzustand verändert, angegeben.

Gemäß einem weiteren Aspekt ist ein Verfahren zur Bestimmung eines Füllstandes oder einer Dichte eines sich in einem Behälter befindlichen Mediums angegeben, bei dem die kinetische Energie der einfallenden sekundären kosmische Strahlung zumindest teilweise mittels der Strahlungsdetektoranordnung in elektromagnetische Strahlung bzw. Lichtquanten umgewandelt wird. Anhand der der hierbei entstehenden Lichtpulse wird über Zählung von Koinzidenzereignissen eine erste Myonen-Zählrate $N_1$, welche nicht durch das zu messende Medium beeinflusst wird und als Referenz dient und eine zweite Myonen-Zählrate $N_2$, welche durch das zu messende Medium beeinflusst wird, bestimmt. Daraufhin erfolgt das Ermitteln des Füllstandes oder der Dichte des Mediums aus der ermittelten ersten und zweiten Myonen-Zählrate $N_1$ und $N_2$.

Die Integrationszeit der einzelnen Ereignisse zur Ermittlung einer Myonen-Zählrate mit der erfindungsgemäßen Füllstandmessanordnung liegt im Minuten-Bereich, typischerweise 10 bis 20 Minuten. Somit kann dieses Verfahren auch in Gebäuden zur Verwendung kommen, dessen konstruktive Bauelemente einen Teil der einfallenden niederenergetischen Myonen bereits absorbiert haben. Da die Teilchenstromdichte der Myonen auf Meereshöhe etwa 100 pro Quadratmeter und Sekunde beträgt, eignet sich das Messverfahren aufgrund der niedrigen Zählrate nur für Anwendungen mit niedrigen Anforderungen an Messwiederhohlrate bzw. zeitlicher Dynamik. Des Weiteren ist der Einsatz einer solchen Messanordnung nur an Orten sinnvoll, an denen die Myonen-Flussrate nicht durch sich oberhalb der Füllstandmessanordnung bewegende Objekte zeitlich und lokal unterschiedlich beeinflusst wird. Die hierbei entstehen Messfehler pflanzen sich bei der Bestimmung der Füllhöhe oder der Dichte des zu messenden Mediums fort.

Gemäß einem weiteren Aspekt ist ein Programmelement angegeben, das, wenn es auf einem Prozessor einer Myonen-Füllstandmessanordnung ausgeführt wird, die Myonen-Füllstandmessanordnung anleitet, einen Füllstand oder eine Dichte eines Mediums in einem Behälter aus den erfassten Messsignalen zu ermitteln. Das Ermitteln der Messsignale erfolgt auf Basis der Bestimmung einer ersten Myonen-Zählrate $N_1$, welche nicht durch das zu messende Medium beeinflusst wird und als Referenz dient, und der Bestimmung einer zweiten Myonen-Zählrate $N_2$, welche durch das zu messende Medium beeinflusst wird.

Dabei kann das Programmelement z. B. Teil einer Software sein, die auf dem Prozessor gespeichert ist. Der Prozessor kann dabei ebenso Gegenstand der Erfindung sein. Weiterhin umfasst dieser Aspekt ein Programmelement, welches schon von Anfang an die Erfindung verwendet, sowie auch ein Programmelement, welches durch eine Aktualisierung (Update) ein bestehendes Programm zur Verwendung der Erfindung veranlasst.

Gemäß einem weiteren Aspekt ist ein computerlesbares Medium angegeben, auf dem ein Programmelement gespeichert ist, das, wenn es auf einem Prozessor einer Myonen-Füllstandmessanordnung ausgeführt wird, die Myonen-Füllstandmessanordnung veranlasst, das oben und im Folgenden beschriebene Verfahren auszuführen.

Ein Kemaspekt der Erfindung ist es, dass eine effiziente Füllstandmessmessanordnung zur Messung eines Füllstands oder einer Dichte bereitgestellt wird. Durch die Messung sekundärer kosmischen Strahlung kann auf eine radioaktive Strahlenquelle verzichtet werden. Dadurch können die Kosten zur Herstellung, zum Aufbau, zur Justierung und Betrieb des Füllstandmesssystems reduziert werden. Zusätzlich wird die Zulassung der Füllstandmessanordnung vereinfacht und die strahlenschutztechnische Reglementierung zum Betrieb der Messstelle eliminiert.

Im Folgenden werden mit Verweis auf die Figuren Ausführungsformen beschrieben.

## Kurze Beschreibung der Figuren

Die Figuren sind schematisch und nicht maßstabsgetreu. Sind in der nachfolgenden Beschreibung in verschiedenen Figuren die gleichen Bezugszeichen angegeben, so bezeichnen diese gleiche oder ähnliche Elemente.

Fig. 1 zeigt eine schematische Darstellung einer radiometrischen Messanordnung zur Füllstands- oder Dichtemessung.

Fig. 2 zeigt eine schematische Darstellung einer Füllstandmessanordnung mit einer Strahlungsdetektoranordnung gemäß einer Ausführungsform.

Fig. 3 zeigt eine schematische Darstellung einer Füllstandmessanordnung mit einer Strahlungsdetektoranordnung gemäß einer Ausführungsform.

Fig. 4 zeigt eine schematische Darstellung des prinzipiellen Aufbaus einer Detektoranordnung zur Füllstandmessung mittels Myonen gemäß einer Ausführungsform.

Fig. 5 zeigt eine schematische Darstellung einer weiteren Füllstandmessanordnung gemäß einer Ausführungsform.

Fig. 7 zeigt eine schematische Darstellung einer Verwendung einer Füllstandmessanordnung zur Bestimmung des Sedimentationsgrades eines Stausees gemäß einer weiteren Ausführungsform.

Fig. 8 zeigt eine schematische Darstellung einer Verwendung einer Füllstandmessanordnung zur Bestimmung des Sedimentationsgrades eines Stausees gemäß einer weiteren Ausführungsform.

Fig. 9 zeigt ein Flussdiagramm eines Verfahrens zur Bestimmung eines Füllstandes oder einer Dichte eines Mediums in einem Behälter gemäß einer weiteren Ausführungsform.

Detaillierte Beschreibung von Ausführungsformen

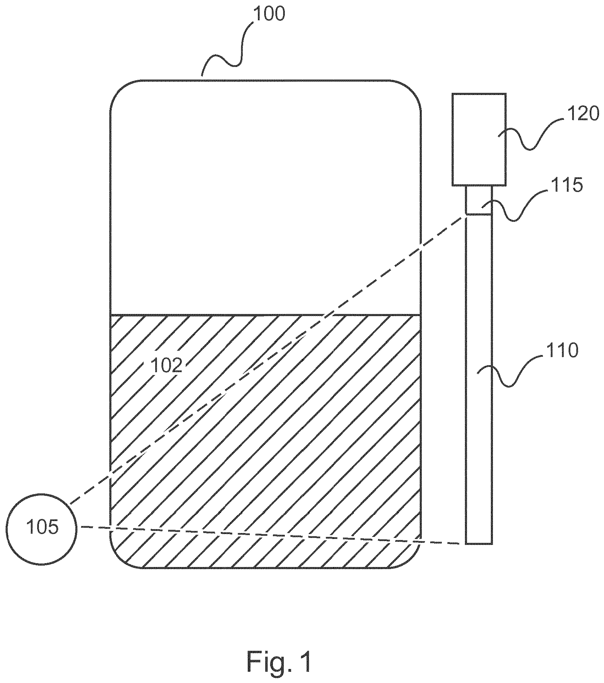

Fig. 1 zeigt eine schematische Darstellung einer radiometrischen Messanordnung zur Füllstands- und Dichtemessung. Es ist eine radioaktive Strahlenquelle 105 eines Gammastrahlers (z. B. $^{60}$Co oder $^{137}$Cs) seitlich an einem mit einem Medium 102 befüllten Behälter 100 und eine gegenüberliegende Detektoranordnung mit einem Szintillator 110 vorgesehen. Die Gammaquanten aus der Strahlenquelle 105 strahlen durch den Behälter 100 und das Medium 102. Die von Medium und Behälter nicht absorbierten Gammaquanten können durch den Szintillator 110 erfasst, durch einen Photoelektronenvervielfacher (PMT bzw SiPM - Silizium-Photomultiplier) 115 in ein elektrisches Signal umgewandelt und anschließend von einer Sensorelektronik 120 gezählt werden. Aus der so ermittelten Zählrate kann die Höhe des Füllstandes des Mediums 102 bei bekannter Dichte des Mediums von einer Auswerteeinheit ermittelt werden.

Die radioaktive Strahlenquelle 105 ist in einem Strahlenschutzbehälter (nicht angezeigt) eingesetzt und sendet Strahlung aus, die bei Betrieb nur in der Richtung des Behälters und/oder des Szintillators aus dem Strahlenschutzbehälter austreten kann, um das Bedienpersonal der Anlage vor Ort vor radioaktiver Strahlung der Messanordnung zu schützen. Um ein ideales Ergebnis zu erzielen, ist ein Justieren der Anordnung notwendig und relevant.

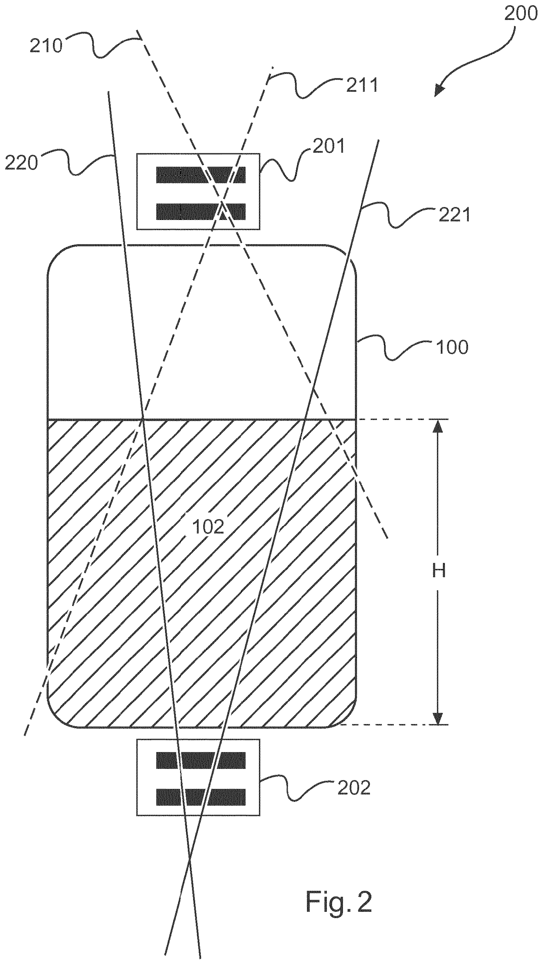

Fig. 2 zeigt eine schematische Darstellung einer Füllstandmessanordnung 200 gemäß einer ersten Ausführungsform. Die Füllstandmessanordnung umfasst zwei separate richtungsselektive Detektoren mit jeweils Szintillatoren die vorzugsweise parallel angeordnet sind.

Ein erster richtungsselektiver Detektor bestehend aus einem ersten Paar Szintillatoren 201 ist vorzugsweise über dem Behälter 100 angeordnet, um eine erste Teilchen-Zählrate oder Myonen-Zählrate $N_1$ zu bestimmen. Diese wird nicht durch das zu messende Medium 102 und den Behälter 101 beeinflusst und dient als Referenz. Die so detektierten Myonen bewegen sich beispielsweise entlang der Trajektorien 210, 211. Hierfür muss der erste richtungsselektive Detektor 201 nicht zwangsläufig über dem Behälter angeordnet sein, wichtig ist nur, dass dessen ermittelte Zählrate nicht durch das zu messende Medium oder andere Objekte zeitlich variabel beeinflusst wird. Der Einfluss anderer Objekte ist vertretbar, solange diese Objekte statisch und somit einen zeitlich konstanten Einfluss auf die zu ermittelte Referenzzählrate $N_1$ besitzen (beispielsweise konstruktive Elemente eines Gebäudes).

Ein zweiter richtungsselektiver Detektor bestehend aus einem zweiten Paar Szintillatoren 202 ist unter dem Behälter 100 angeordnet, um eine zweite Myonen-Zählrate $N_2$ zu erfassen. Diese wird durch die Höhe und Dichte des zu messenden Mediums beeinflusst. Die so erfassten Myonen bewegen sich beispielsweise entlang der Trajektorien 220, 221.

Aufgrund der Anordnung und Geometrie der verwendeten Szintillatoren, müssen Myonen die den ersten richtungsselektiven Detektor 201 entlang der Trajektorien 210 und 211 durchlaufen haben, nicht zwangsläufig von dem zweiten richtungsselektiven Detektor 202 erfasst werden.

Aus den beiden ermittelten Myonen-Zählraten $N_1$ und $N_2$ wird der Füllstand oder die Dichte des Mediums 102 in dem Behälter 100 von einer Auswerteeinheit ermittelt.

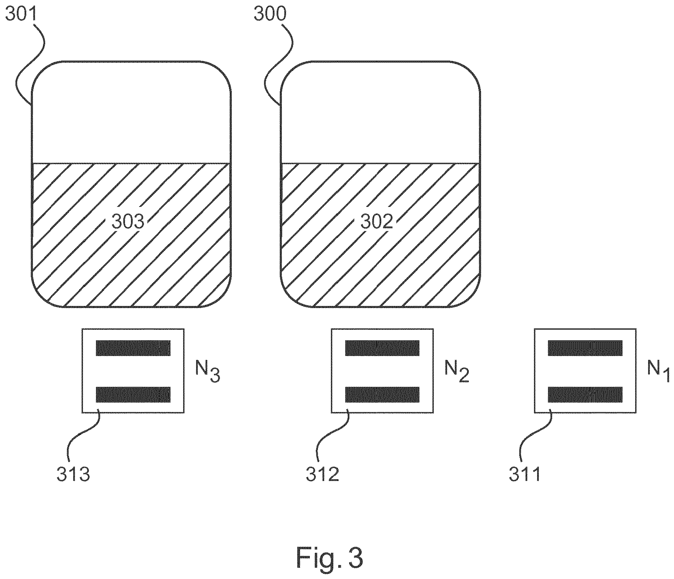

Fig. 3 zeigt eine schematische Darstellung einer Füllstandmessanordnung gemäß einer weiteren Ausführungsform. Soll der Füllstand oder die Dichte eines Mediums in mehreren Behältern (300 und 301) mit jeweils unterschiedlichen Medien (302 und 303) ermittelt werden, genügt ein einzelner richtungsselektiver Detektor 311, bestehend aus zwei Szintillatoren zur Bestimmung einer Referenzzählrate $N_1$. Zusammen mit jeweils einem weiteren richtungsselektiven Detektor 312, 313, usw. pro zusätzlichem Behälter, kann der Füllstand oder die Dichte in dem jeweiligen Behälter anhand der jeweils lokal gemessenen Myonen-Zählrate $N_i$ ermittelt werden.

Dies kann entweder zentral durch eine einzige Auswerteeinheit für alle zu messenden Behälter erfolgen oder Lokal mit einer Auswerteeinheit pro richtungsselektivem Detektor am jeweiligen Behälter durch Zuführung der gemessen Referenzzählrate $N_1$.

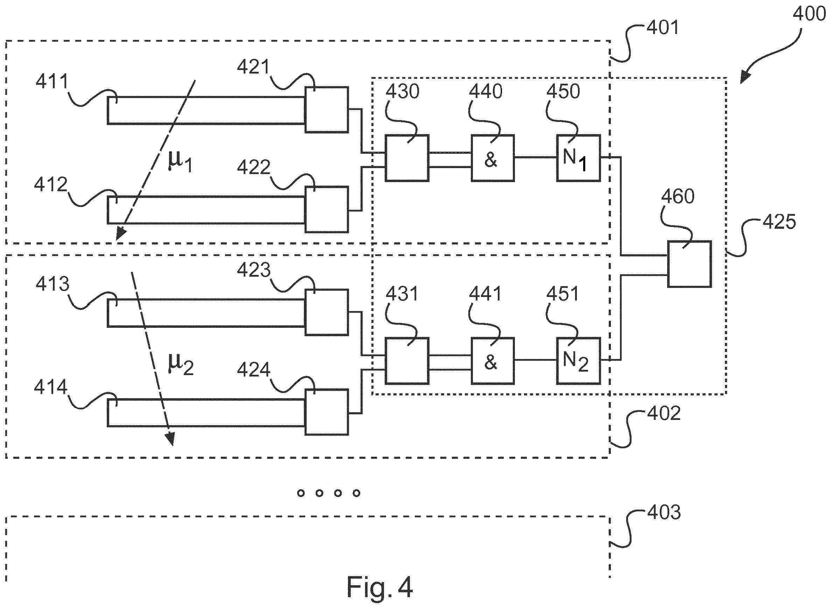

Fig. 4 zeigt eine schematische Darstellung des prinzipiellen Aufbaus einer Detektoranordnung zur Füllstandmessung mittels Myonen gemäß den vorhergehenden Ausführungsformen. Die Myonen-Füllstandmessanordnung 400 weist die vorhergehend beschriebene Strahlungsdetektoranordnung mit wenigstens zwei richtungsselektiven Detektoren 401 und 402 und mindestens eine Auswerteeinheit 460 auf. Ein erster richtungsselektiver Detektor 401 besteht aus einem ersten Paar Szintillatoren 411, 412. Diese sind jeweils an einen empfindlichen Lichtsensor 421, 422 angeschlossen, welche dazu eingerichtet sind, die in den Szintillatoren durch die von der auftreffenden sekundären kosmischen Strahlung (Myonen) erzeugten Lichtpulse in ein elektrisches Signal z. B. einen äquivalenten Spannungs- oder Strompuls umzuwandeln. Bei dem Sensor kann es sich beispielsweise um eine Photoelektronenvervielfacher-Röhre (PMT) oder um einen Silizium-Photoelektronenvervielfacher (SiPM) handeln. Die Auswerteeinheit weist eine Diskriminatoreinheit 430, eine Koinzidenzeinheit 440, eine Ereigniszähleinheit 450 und mindestens eine Auswerteeinheit 460 auf.

Ein erstes Myon $\mu_1$, welches den ersten richtungsselektiven Detektor 401 durchläuft, erzeugt einen koinzidenten Lichtpuls auf dem ersten 411 und zweiten Szintillator 412 durch Wechselwirkung mit deren Materie.

Gleiches gilt für weitere Myonen die den richtungsselektiven Detektor 401 und dessen Szintillatoren durchlaufen. Ein erster Lichtsensor 421 und ein zweiter empfindlicher Lichtsensor 422 wandeln die in den Szintillatoren erzeugten Lichtpulse in ein entsprechendes elektrisches Signal um. Die Diskriminatoreinheit 430 trennt Nutzsignale von Störsignalen (beispielsweise thermisches Rauschen) entsprechend der detektierten Signalform (Amplitude, Zeitdauer über Schwellwert, ...) ab. Die so gefilterten Signale werden weiter zur Koinzidenzeinheit 440 geleitet, die dazu eingerichtet ist, koinzidente Signale, welche beim Durchgang eines Myons durch ein erstes Paar von Szintillatoren 411, 412 entstehen zu detektieren. Eine Ereigniszähleinheit 450 zählt die Anzahl der koinzidenten Ereignisse und ermittelt so eine erste Myonen-Zählrate $N_1$, welche nicht durch das zu messende Medium beeinflusst wird und als Referenz dient.

Gleiches gilt für zweite Myonen $\mu_2$, welche ein zu messende Medium bereits durchlaufen haben und durch einen zweiten richtungsselektiven Detektor 402 detektiert werden. Dieser besteht aus einem weiteren Paar Szintillatoren 413, 414, zwei empfindlichen Lichtsensoren 423, 424, einer Diskriminatoreinheit 431, einer Koinzidenzeinheit 441 und einer Ereigniszähleinheit 451. Die Ereigniszähleinheit 451 ermittelt somit eine zweite Myonen-Zählrate $N_2$, welche durch das zu messende Medium beeinflusst wird.

Gleiches gilt auch für weitere richtungsselektive Detektoren 403.

Durch die Auswerteelektronik 460 erfolgt das Auswerten und Vergleich der ermittelten Zählraten $N_1$ und $N_2$, bzw. $N_i$ woraus der Füllstand oder Dichte der zu messenden Medien ermittelt werden können.

Aufgrund der örtlichen Trennung der richtungsselektiven Detektoren 401 und 402 (und 403) (beispielsweise oberhalb und unterhalb eines Behälters) ist es sinnvoll dass jeder richtungsselektive Detektor eine Diskriminatoreinheit, eine Koinzidenzeinheit und eine Ereigniszähleinheit aufweist. Die Auswerteeinheit mag in einem der richtungsselektiven Detektoren integriert sein. Es ist aber auch denkbar, dass diese als ein separates Gerät ausgeführt ist. Somit ist ein modularer Aufbau denkbar.

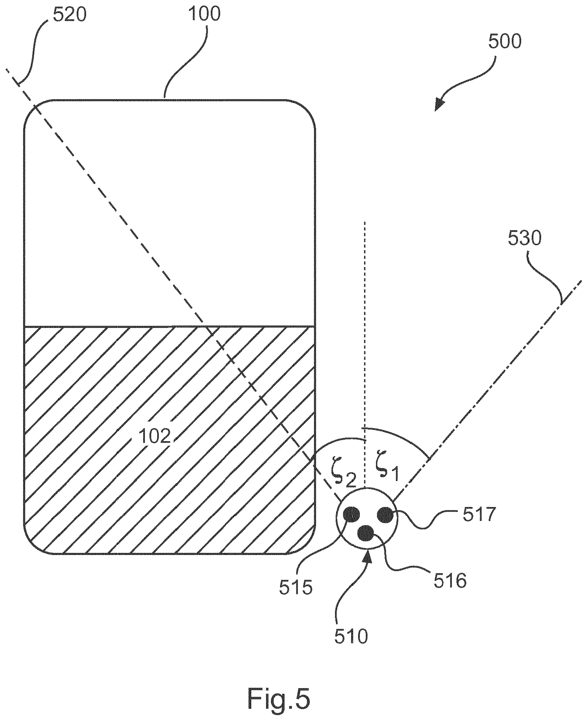

Fig. 5 zeigt eine schematische Darstellung einer Füllstandmessanordnung 500 mit einer richtungsselektiven Detektoranordnung 510 zur Detektion einfallender sekundärer kosmischer Strahlung. Die Füllstandmessanordnung ist seitlich an einem Behälter 100, der mit einem Medium 102 befüllt ist, angeordnet.

Die richtungsselektive Detektoranordnung 510 besteht aus drei Szintillatoren, wobei ein erstes Paar von Szintillatoren 515 und 516 einen ersten richtungsselektiven Detektor und ein zweites Paar von Szintillatoren 516 und 517 einen zweiten richtungsselektiven Detektor bilden. Hierbei ist der Szintillator 516 sowohl Bestandteil des ersten als auch zweiten richtungsselektiven Detektors.

Der erste richtungsselektive Detektor detektiert eine erste Myonen-Zählrate $N_1$, welche nicht durch das zu messende Medium beeinflusst wird und als Referenz dient. Die so detektierten Myonen treffen in einem gewissen Winkelbereich um eine Zentraltrajektorie 530, welche einen Zenit-Winkel $\zeta_1$ aufweist auf die richtungsselektive Detektoranordnung 510.

Der zweite richtungsselektive Detektor detektiert eine zweite Myonen-Zählrate $N_2$, welche durch das zu messenden Medium beeinflusst wird. Die so detektierten Myonen durchlaufen den Behälter und das zu messenden Medium in einem gewissen Winkelbereich um eine Zentraltrajektorie 520, welche einen Zenit-Winkel $\zeta_2$ aufweist.

Anhand der beiden Zählraten $N_1$ und $N_2$ kann der Füllstand oder die Dichte des Mediums von einer Auswerteeinheit ermittelt werden.

Somit kann die beschriebene Füllstandmessanordnung nicht nur zur kontinuierlichen Füllstandmessung verwendet werden, sondern auch als Grenzschalter, welcher bei Unterschreitung eines gewissen Zählratenverhältnisses $N_1/N_2$ seinen Schaltzustand verändert.

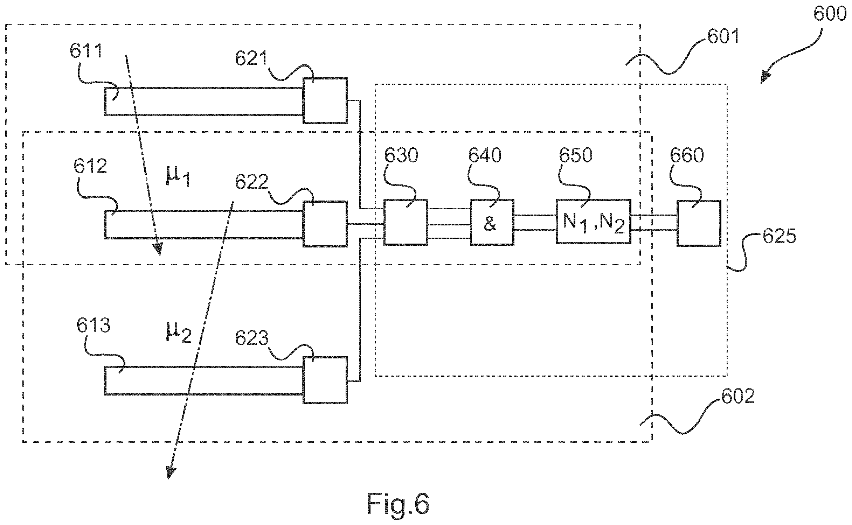

Fig. 6 zeigt eine schematische Darstellung des prinzipiellen Aufbaus eines richtungsselektiven Detektors zur Füllstandmessung mittels Myonen gemäß den vorhergehenden Ausführungsformen. Hierbei besteht, wie auch in der Ausführungsform der Figur 5, die Strahlungsdetektoranordnung 600 vorzugsweise aus drei räumlich getrennten, länglichen und parallel angeordneten Szintillatoren 611, 612, 613, die zwei richtungsselektive Detektoren 601 und 602 bilden. Die drei parallelen Szintillatoren liegen dabei nicht in einer Ebene. Die drei Szintillatoren sind jeweils an einen empfindlichen Lichtsensor 621, 622, 623 angeschlossen, welche dazu eingerichtet sind, die in den Szintillatoren durch die auftreffende Strahlung erzeugten Lichtpulse in ein elektrisches Signal z. B. eine äquivalente Spannung umzuwandeln. Die Auswerteeinheit 625 weist eine Diskriminatoreinheit 630, eine Koinzidenzeinheit 640, eine Ereigniszähleinheit 650 und eine Auswerteelektronik 660 auf.

Erzeugen erste Myonen $\mu_1$, die das zu messende Medium nicht, bzw. noch nicht durchlaufen haben, koinzidente Signale auf dem ersten und zweiten Szintillator 611, 612, wandelt der erste Lichtsensor 621 und der zweite Lichtsensor 622 die in den Szintillatoren erzeugten Lichtquanten in ein entsprechendes elektrisches Signal um.

Erzeugen zweite Myonen $\mu_1$, die das zu messende Medium bereits durchlaufen haben, koinzidente Signale auf dem zweiten und dritten Szintillator 612, 613, wandelt der zweite Lichtsensor 622 und der dritte Lichtsensor 623 die in den Szintillatoren erzeugten Lichtquanten in ein entsprechendes elektrisches Signal um.

Die Diskriminatoreinheit 630 trennt Nutzsignale der beiden richtungsselektiven Detektoren 601 und 602 von Störsignalen (beispielsweise thermisches Rauschen) entsprechend der detektierten Signalform (Amplitude, Zeitdauer über Schwellwert usw.) ab.

Die durch die Diskriminatoreinheit 630 gefilterten Signale werden weiter zur Koinzidenzeinheit 640 geleitet, die dazu eingerichtet ist, die Koinzidenzereignisse des Myonen-Einfalls auf ein erstes Paar der drei Szintillatoren 611, 612 und die Koinzidenzereignisse des Myonen-Einfalls auf ein zweites Paar der drei Szintillatoren 612, 613 zu detektieren. Die so detektierten Koinzidenzereignisse werden von einer Ereigniszähleinheit 650 gezählt und so eine ersten Myonen-Zählrate $N_1$, welche nicht durch das zu messende Medium beeinflusst wird und als Referenz dient, und eine zweite Myonen-Zählrate $N_2$, welche durch das zu messende Medium beeinflusst wird, bestimmt.

Durch die Auswerteelektronik 660 erfolgt das Auswerten und Vergleich der beiden ermittelten Zählraten $N_1$ und $N_2$, woraus der Füllstand oder die Dichte des zu messenden Mediums bestimmt werden kann.

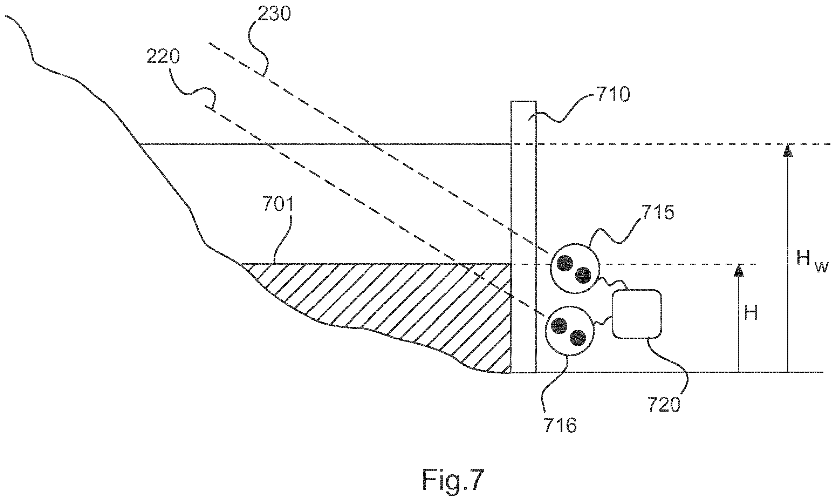

Fig. 7 zeigt eine schematische Darstellung einer Verwendung der Füllstandmessanordnung zur Bestimmung des Sedimentationsgrades eines Stausees gemäß einer weiteren Ausführungsform. Hierzu sind zwei richtungsselektive Detektoren 715 und 716 mit jeweils zwei Szintillatoren seitlich an einer Staumauer 710 gegenüber einem Stausee angeordnet. Die Höhe H der Sedimentationsschicht des Stausees wird von der Auswerteeinheit 720 anhand der durch die beiden richtungsselektiven Detektoren ermittelten Zählraten $N_1$ und $N_2$ bestimmt. Die erste Zählrate $N_1$ von Myonen wird durch den ersten richtungsselektiven Detektor 715 bestimmt. Diese wird durch die Höhe des aufgestauten Wasser $H_w$ und der Staumauer jedoch nicht von der Sedimentationsschicht beeinflusst und dient als Referenz.

Die von der Strahlungsdetektoranordnung 716 ermittelte zweite Myonen-Zählrate $N_2$, wird durch das aufgestaute Wasser, der Sedimentationsschicht und der Staumauer beeinflusst.

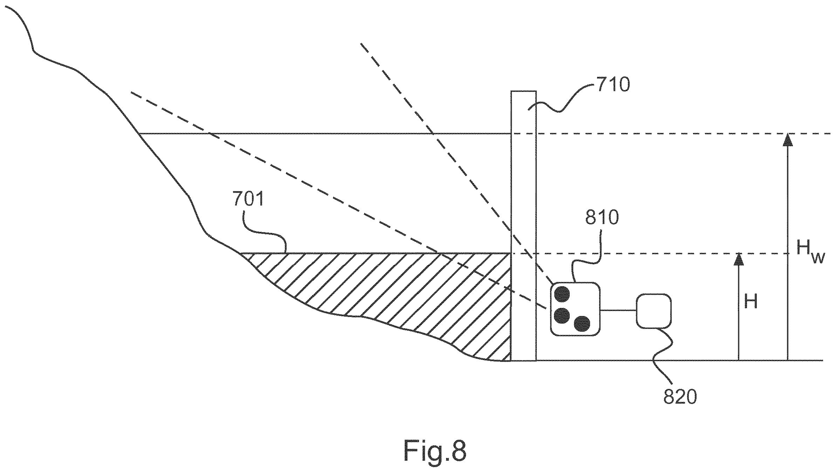

Fig. 8 zeigt eine schematische Darstellung eine Verwendung der Myonen-Füllstandmessanordnung zur Bestimmung des Sedimentationsgrades eines Stausees gemäß einer weiteren Ausführungsform. Die Strahlungsdetektoranordnung 810 ist seitlich an einer Staumauer gegenüber einem Stausee angeordnet. Die Auswerteeinheit 820 bestimmt die Höhe H der Sedimentationsschicht 701 des Stausees anhand der durch die Strahlungsdetektoranordnung 810 ermittelten ersten Zählrate $N_1$ von Myonen, die den Stausee (sprich Staumauer, aufgestautes Wasser) durchlaufen haben und als Referenz dient, und einer zweiten Zählrate $N_2$ von Myonen, welche zusätzlich durch die Sedimentationsschicht beeinflusst.

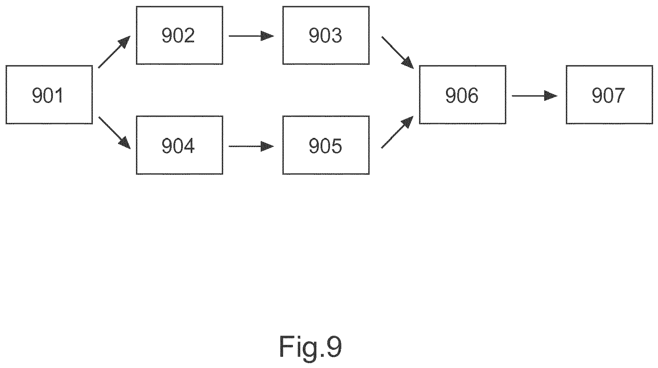

Fig. 9 zeigt ein Flussdiagramm eines Verfahrens zur Bestimmung eines Füllstandes oder der Dichte eines sich in einem Behälter befindlichen Mediums gemäß einer weiteren Ausführungsform. Im ersten Schritt 901 wird die Messung gestartet. In Schritt 902 wird einfallende sekundäre kosmische Strahlung in einem ersten richtungsselektiven Detektor zumindest teilweise in elektromagnetische Strahlung bzw. Lichtquanten oder Lichtpulse umgewandelt. In Schritt 903 wird anhand der in Schritt 902 in unterschiedlichen Szintillatoren entstehenden koinzidenten Lichtpulse eine erste Teilchen- oder Myonen-Zählrate, welche nicht durch ein zu messendes Medium beeinflusst wird bestimmt. Diese erste Zählrate dient als Referenz.

Parallel dazu wird Schritt 904 einfallende sekundäre kosmische Strahlung von mindestens einem weiteren richtungsselektiven Detektor zumindest teilweise in elektromagnetische Strahlung bzw. Lichtquanten umgewandelt. In Schritt 905 wird anhand der in Schritt 904 in unterschiedlichen Szintillatoren entstehenden koinzidenten Lichtpulse mindestens eine weitere Myonen-Zählrate, welche durch ein zu messendes Medium beeinflusst wird bestimmt.

In Schritt 906 wird der Füllstand oder die Dichte mindestens eines Mediums aus der ermittelten Myonen-Referenzzählrate und mindestens einer weiteren Myonen-Zählrate, welche durch das zu messende Medium beeinflusst wird, bestimmt. In Schritt 907 wird die Messung beendet.

Ergänzend ist darauf hinzuweisen, dass "umfassend" und "aufweisen" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsformen beschrieben worden sind, auch in Kombination mit anderen Merkmalen oder Schritten anderer oben beschriebener Ausführungsformen verwendet werden können. Bezugszeichen in den Ansprüchen sind nicht als Einschränkung anzusehen.

**Patentansprüche**

1. Füllstandmessanordnung (200, 500), eingerichtet zur Bestimmung eines Füllstands oder einer Dichte eines Mediums (102) in einem Behälter (100), umfassend:

    eine Detektoranordnung (510), eingerichtet zur Detektion einfallender sekundärer kosmischer Strahlung und Umwandlung in elektrische Signale;
    wobei die Detektoranordnung (510) einen ersten und einen zweiten richtungsselektiven Detektor (201, 202, 715, 716) aufweist;
    wobei die Detektoranordnung (510) mittels des ersten richtungsselektiven Detektors (201, 715) zur Erfassung einer ersten Teilchen-Zählrate, welche nicht durch das zu messende Medium beeinflusst wird und als Referenz dient, und mittels des zweiten richtungsselektiven Detektors (202, 716) zur Erfassung einer zweiten Teilchen-Zählrate, welche durch das zu messenden Medium beeinflusst wird, eingerichtet ist;
    eine Auswerteeinheit (625), eingerichtet zur Berechnung des Füllstands oder der Dichte des Mediums (102) aus der ersten und der zweiten Teilchen-Zählrate;

wobei der erste oder zweite richtungsselektive Detektor jeweils eine Kombination mehrerer Szintillatoren (411, 412, 413, 414, 611, 612, 613) umfasst;

wobei die Szintillatoren des ersten und zweiten richtungsselektiven Detektors räumlich derart angeordnet sind, dass die Detektion der Strahlung auf einen bestimmten Raumwinkelbereich eingeschränkt ist.

2. Füllstandmessanordnung (200, 500) nach Anspruch 1,

wobei es sich bei der einfallenden sekundären kosmischen Strahlung um Myonen handelt.

3. Füllstandmessanordnung (200, 500) nach Anspruch 1 oder 2,

wobei der erste richtungsselektive Detektor aus einem ersten Paar Szintillatoren (516, 517) besteht, eingerichtet zur Bestimmung einer ersten Teilchen-Zählrate;

wobei der zweite richtungsselektive Detektor aus einem zweiten Paar Szintillatoren (515, 516) besteht, eingerichtet zur Bestimmung einer zweiten Teilchen-Zählrate.

4. Füllstandmessanordnung (200, 500) nach einem der vorhergehenden Ansprüche,

wobei die Detektoranordnung (510) einen ersten Szintillator (515), einen zweiten Szintillator (516) und einen dritten Szintillator (517) aufweist;

wobei der erste und zweite Szintillator (517, 516) dazu eingerichtet sind, über Koinzidenz der im ersten und zweiten Szintillator detektierten Ereignisse eine erste Teilchen-Zählrate zu bestimmen;

wobei der zweite und dritte Szintillator (516, 515) dazu eingerichtet sind, über Koinzidenz der im zweiten und dritten Szintillator detektierten Ereignisse eine zweite Teilchen-Zählrate zu bestimmen.

5. Füllstandmessanordnung (200, 500) nach einem der vorhergehenden Ansprüche, wobei die Auswerteeinheit (625) mindestens eine Diskriminatoreinheit (630), mindestens eine Koinzidenzeinheit (640), mindestens eine Ereigniszähleinheit (650) und mindestens eine Auswerteelektronik (660) aufweist.

6. Füllstandmessanordnung (200, 500) nach Anspruch 5,

wobei die Diskriminatoreinheit (630) dazu eingerichtet ist, die von der Detektoranordnung (510) detektierten Nutzsignale von Störsignalen abzutrennen.

7. Füllstandmessanordnung (200, 500) nach Anspruch 5 oder 6,

wobei die Koinzidenzeinheit (640) dazu eingerichtet ist, die koinzidenten Ereignisse eines Myonen-Einfalls auf ein erstes Paar Szintillatoren, und die koinzidenten Ereignisse eines Myonen-Einfalls auf mindestens ein weiteres Paar Szintillatoren zu detektieren.

8. Füllstandmessanordnung (200, 500) nach einem der Ansprüche 5 bis 7,

wobei die Ereigniszähleinheit (650) dazu eingerichtet ist, innerhalb eines einstellbaren Zeitintervalls, die Anzahl koinzidenter Ereignisse des ersten richtungsselektiven Detektors zu zählen und so eine erste Teilchenzählrate $N_1$ zu bestimmen, und die Anzahl koinzidenter Ereignisse des zweiten richtungsselektiven Detektors zu zählen und so eine zweite Teilchenzählrate $N_2$ zu bestimmen.

9. Füllstandmessanordnung (200, 500) nach einem der Ansprüche 5 bis 8,

wobei die Auswerteelektronik (660) dazu eingerichtet ist, die durch die Ereigniszähleinheit (650) ermittelten Teilchen-Zählraten $N_1$ und $N_2$ der detektierten koinzidenten Ereignisse auszuwerten und die beiden Zählraten zu vergleichen;

wobei die Auswerteelektronik (660) dazu eingerichtet ist, den Füllstand oder die Dichte des zu messenden Mediums (102) durch Vergleich der beiden Teilchen-Zählraten $N_1$ und $N_2$ zu ermitteln.

10. Füllstandmessanordnung (200, 500) nach einem der vorhergehenden Ansprüche, wobei der erste richtungsselektive Detektor (201) zwei parallel angeordnete Szintillatoren aufweist;

wobei der zweite richtungsselektive Detektor (202) zwei parallel angeordnete Szintillatoren aufweist; und

wobei die Auswerteelektronik (460, 660) dazu eingerichtet ist, den Füllstand oder die Dichte des Mediums (102) in dem Behälter (100) basierend auf dem Vergleich der beiden Zählraten $N_1$ und $N_2$ zu ermitteln.

11. Verwendung einer Füllstandmessanordnung (200, 500), eingerichtet zur Bestimmung eines Füllstands oder einer Dichte eines Mediums (102), umfassend:

eine Detektoranordnung (510), eingerichtet zur Detektion einfallender sekundärer kosmischer Strahlung und Umwandlung in elektrische Signale;

wobei die Detektoranordnung (510) einen ersten und einen zweiten richtungsselektiven Detektor (201, 202, 715, 716) aufweist;

wobei die Detektoranordnung (510) zur Erfassung einer ersten Myonen-Zählrate $N_1$, welche nicht durch das zu messende Medium beeinflusst wird und als Referenz dient, und einer zweiten Myonen-Zählrate $N_2$, welche durch das zu messende Medium beeinflusst wird, eingerichtet ist;

eine Auswerteeinheit (625), eingerichtet zur Berechnung des Füllstands oder der Dichte des Mediums (102) aus der ersten und der zweiten Teilchen-Zählrate, zur Bestimmung des Sedimentationsgrades eines Stausees,

wobei die Füllstandmessanordnung dazu eingerichtet ist, die Höhe (H) der Sedimentationsschicht (701) anhand der durch die Detektoranordnung (510) bestimmten ersten und zweiten Myonen-Zählraten $N_1$ und $N_2$ zu ermitteln.

12. Verwendung einer Füllstandmessanordnung (200, 500) nach einem der Ansprüche 1 bis 10 zur Bestimmung eines Füllstands oder einer Dichte eines Mediums (102) in einem Behälter (100), einem Stausee, einer Schütthalde oder einem Fluss.

13. Verwendung einer Füllstandmessanordnung (200, 500) nach einem der Ansprüche 1 bis 10 als Grenzschalter zur Bestimmung eines Grenzstands.

14. Verfahren zur Bestimmung eines Füllstandes oder einer Dichte eines befindlichen Mediums (102) in einem Behälter, das Verfahren aufweisend die Schritte:

Umwandeln von der einfallenden kosmischen Strahlung in elektrische Signale;

Erfassen einer ersten Teilchen-Zählrate, welche nicht durch das zu messende Medium beeinflusst wird und als Referenz dient, mittels eines ersten richtungsselektiven Detektors (201, 715) einer Detektoranordnung (510);

Erfassen einer zweiten Teilchen-Zählrate, welche durch das zu messende Medium beeinflusst wird, mittels eines zweiten richtungsselektiven Detektors (202, 716) der Detektoranordnung (510);

Ermitteln des Füllstands oder der Dichte des Mediums (102) aus der ersten und der zweiten Teilchen-Zählrate;

wobei der erste oder zweite richtungsselektive Detektor jeweils eine Kombination mehrerer Szintillatoren (411, 412, 413, 414, 611, 612, 613) umfasst;

wobei die Szintillatoren des ersten und zweiten richtungsselektiven Detektors räumlich derart angeordnet sind, dass die Detektion der Strahlung auf einen bestimmten Raumwinkelbereich eingeschränkt ist.

15. Programmelement, das, wenn es auf einem Prozessor einer Füllstandmessanordnung nach einem der Ansprüche 1 bis 10 ausgeführt wird, die Füllstandmessanordnung anleitet, die Schritte des Verfahrens nach Anspruch 14 durchzuführen.

16. Computerlesbares Medium, auf dem ein Programmelement nach Anspruch 15 gespeichert ist.

**Claims**

1. Fill level measuring arrangement (200, 500), configured to determine a fill level or a density of a medium (102) in a container (100), comprising:

a detector arrangement (510), configured to detect incident secondary cosmic rays and convert into electrical signals;

wherein the detector arrangement (510) comprises a first and a second direction-selective detector (201, 202, 715, 716);

wherein the detector arrangement (510) is configured to detect, by means of the first direction-selective detector (201, 715), a first particle counting rate which is not influenced by the medium to be measured and serves as a reference, and to detect, by means of the second direction-selective detector (202, 716), a second particle counting rate which is influenced by the medium to be measured;

an evaluation unit (625), configured to calculate the fill level or the density of the medium (102) from the first and second particle counting rate;

wherein the first or second direction-selective detector comprises, respectively, a combination of a plurality of scintillators (411, 412, 413, 414, 611, 612, 613);

wherein the scintillators of the first and second direction-selective detector are spatially arranged in such a way that the detection of the radiation is limited to a certain spatial angle range.

2. Fill level measuring arrangement (200, 500) according to claim 1,
where the incident secondary cosmic rays are muons.

3. Fill level measuring arrangement (200, 500) according to claim 1 or 2,

wherein the first direction-selective detector consists of a first pair of scintillators (516, 517), configured to determine a first particle counting rate;

wherein the second direction-selective detector consists of a second pair of scintillators (515, 516), configured to determine a second particle counting rate.

4. Fill level measuring arrangement (200, 500) according to any one of the preceding claims,

wherein the detector arrangement (510) comprises a first scintillator (515), a second scintillator (516) and a third scintillator (517); wherein the first and second scintillators (517, 516) are configured to determine a first particle counting rate via coincidence of the events detected in the first and second scintillators; wherein the second and third scintillators (516, 515) are configured to determine a second particle counting rate via coincidence of the events detected in the second and third scintillators.

5. Fill level measuring arrangement (200, 500) according to any one of the preceding claims, wherein the evaluation unit (625) comprises at least one discriminator unit (630), at least one coincidence unit (640), at least one event counting unit (650) and at least one evaluation electronic unit (660).

6. Fill level measuring arrangement (200, 500) according to claim 5, wherein the discriminator unit (630) is configured to separate the useful signals detected by the detector arrangement (510) from interfering signals.

7. Fill level measuring arrangement (200, 500) according to claim 5 or 6, wherein the coincidence unit (640) is configured to detect the coincident events of a muon incidence on a first pair of scintillators, and to detect the coincident events of a muon incidence on at least one further pair of scintillators.

8. Fill level measuring arrangement (200, 500) according to any one of claims 5 to 7, wherein the event counting unit (650) is configured to count, within an adjustable time interval, the number of coincident events of the first direction-selective detector and thus to determine a first particle counting rate $N_1$, and to count the number of coincident events of the second direction-selective detector and thus to determine a second particle counting rate $N_2$.

9. Fill level measuring arrangement (200, 500) according to any one of claims 5 to 8,

wherein the evaluation electronics (660) is configured to evaluate the particle counting rates $N_1$ and $N_2$, determined by the event counting unit (650), of the detected coincident events and to compare the two counting rates;

wherein the evaluation electronics (660) are configured to determine the fill level or the density of the medium (102) to be measured by comparing the two particle counting rates $N_1$ and $N_2$.

10. Fill level measuring arrangement (200, 500) according to any one of the preceding claims,

wherein the first direction-selective detector (201) comprises two scintillators arranged in parallel; wherein the second direction-selective detector (202) comprises two scintillators arranged in parallel; and wherein the evaluation electronics (460, 660) are configured to determine the fill level or the density of the medium (102) in the container (100) based on the comparison of the two counting rates $N_1$ and $N_2$.

11. Use of a fill level measuring arrangement (200, 500), configured to determine a fill level or a density of a medium (102), comprising:

a detector arrangement (510), configured to detect incident secondary cosmic rays and convert into electrical signals; wherein the detector arrangement (510) comprises a first and a second direction-selective detector (201, 202, 715, 716); wherein the detector arrangement (510) is configured to detect a first muon counting rate $N_1$, which is not influenced by the medium to be measured and serves as a reference, and a second muon counting rate $N_2$, which is influenced by the medium to be measured; an evaluation unit (625) configured to calculate the fill level or the density of the medium (102) from the first and second particle counting rates, for determining the degree of sedimentation of a reservoir, wherein the fill level measuring arrangement is configured to determine the height (H) of the sedimentation layer (701) based on the first and second muon counting rates $N_1$ and $N_2$ determined by the detector arrangement (510).

12. Use of a fill level measuring arrangement (200, 500) according to any one of claims 1 to 10 for determining a fill level or a density of a medium (102) in a container (100), a reservoir, a dump or a river.

13. Use of a fill level measuring arrangement (200, 500) according to any one of claims 1 to 10 as a limit switch for determining a limit level.

14. Method for determining a fill level or a density of a fluid (102) located in a container, the method comprising the steps of:

converting incident cosmic rays into electrical signals;

detecting a first particle counting rate, which is not influenced by the medium to be measured and serves as a reference, by means of a first direction-selective detector (201, 715) of a detector arrangement (510);

detecting a second particle counting rate, which is influenced by the medium to be measured, by means of a second direction-selective detector (202, 716) of the detector arrangement (510);

determining the fill level or the density of the medium (102) from the first and second particle counting rates;

wherein the first or second direction-selective detector comprises, respectively, a combination of a plurality of scintillators (411, 412, 413, 414, 611, 612, 613);

wherein the scintillators of the first and second direction-selective detectors are spatially arranged in such a way that the detection of the radiation is limited to a certain spatial angle range.

15. Program element which, when executed on a processor of a fill level measuring arrangement according to any one of claims 1 to 10, instructs the fill level measuring device to perform the steps of the method according to claim 14.

16. Computer-readable medium, on which a program element according to claim 15 is stored.

## Revendications

1. Agencement de mesure de niveau de remplissage (200, 500), conçu pour déterminer un niveau de remplissage ou une densité d'un milieu (102) dans un récipient (100), comprenant :

un agencement de détection (510), conçu pour détecter un rayonnement cosmique secondaire incident et le convertir en signaux électriques ;

dans lequel l'agencement de détection (510) présente un premier et un deuxième détecteur à sélectivité directionnelle (201, 202, 715, 716) ;

dans lequel l'agencement de détection (510) est conçu pour détecter, au moyen du premier détecteur à sélectivité directionnelle (201, 715), un premier taux de comptage de particules qui n'est pas influencé par le milieu à mesurer et sert de référence, et pour détecter, au moyen du deuxième détecteur à sélectivité directionnelle (202, 716), un deuxième taux de comptage de particules qui est influencé par le milieu à mesurer ;

une unité d'évaluation (625), conçue pour calculer le niveau de remplissage ou la densité du milieu (102) à partir du premier et du deuxième taux de comptage de particules ;

dans lequel le premier ou le deuxième détecteur à sélectivité directionnelle comprend chaque fois une combinaison de plusieurs scintillateurs (411, 412, 413, 414, 611, 612, 613) ;

dans lequel les scintillateurs du premier et du deuxième détecteur à sélectivité directionnelle sont disposés dans l'espace de telle sorte que la détection du rayonnement est limitée à une certaine plage d'angles solides.

2. Agencement de mesure de niveau de remplissage (200, 500) selon la revendication 1, dans lequel le rayonnement cosmique secondaire incident est composé de muons.

3. Agencement de mesure de niveau de remplissage (200, 500) selon la revendication 1 ou 2,

dans lequel le premier détecteur à sélectivité directionnelle est constitué d'une première paire de scintillateurs (516, 517) conçus pour déterminer un premier taux de comptage de particules ;

dans lequel le deuxième détecteur à sélectivité directionnelle est constitué d'une deuxième paire de scintillateurs (515, 516) conçus pour déterminer un deuxième taux de comptage de particules.

4. Agencement de mesure de niveau de remplissage (200, 500) selon l'une des revendications précédentes,

dans lequel l'agencement de détection (510) présente un premier scintillateur (515), un deuxième scintillateur (516) et un troisième scintillateur (517) ;

dans lequel les premier et deuxième scintillateurs (517, 516) sont conçus pour déterminer un premier taux de comptage de particules par coïncidence des événements détectés dans les premier et deuxième scintillateurs ;

dans lequel les deuxième et troisième scintillateurs (516, 515) sont conçus pour déterminer un deuxième taux de comptage de particules par coïncidence des événements détectés dans les deuxième et troisième scintillateurs.

5. Agencement de mesure de niveau de remplissage (200, 500) selon l'une des revendications précédentes, dans lequel l'unité d'évaluation (625) présente au moins une unité de discrimination (630), au moins une unité de coïncidence (640), au moins une unité de comptage d'événements (650) et au moins une électronique d'évaluation (660).

6. Agencement de mesure de niveau de remplissage (200, 500) selon la revendication 5, dans lequel l'unité de discrimination (630) est conçue pour séparer les signaux utiles détectés par l'agencement de détection (510) de signaux parasites.

7. Agencement de mesure de niveau de remplissage (200, 500) selon la revendication 5 ou 6, dans lequel l'unité de coïncidence (640) est conçue pour détecter les événements coïncidents d'une incidence de muons sur une première paire de scintillateurs et pour détecter les événements coïncidents d'une incidence de muons sur au moins une autre paire de scintillateurs.

8. Agencement de mesure de niveau de remplissage (200, 500) selon l'une des revendications 5 à 7, dans lequel l'unité de comptage d'événements (650) est conçue pour compter, dans un intervalle de temps réglable, le nombre d'événements coïncidents du premier détecteur à sélectivité directionnelle et déterminer ainsi un premier taux de comptage de particules $N_1$, et pour compter le nombre d'événements coïncidents du deuxième détecteur à sélectivité directionnelle et déterminer ainsi un deuxième taux de comptage de particules $N_2$.

9. Agencement de mesure de niveau de remplissage (200, 500) selon l'une des revendications 5 à 8,

dans lequel l'électronique d'évaluation (660) est conçue pour évaluer les taux de comptage de particules $N_1$ et $N_2$ déterminés par l'unité de comptage d'événements (650) des événements coïncidents détectés et pour comparer les deux taux de comptage ;
dans lequel l'électronique d'évaluation (660) est conçue pour déterminer le niveau de remplissage ou la densité du milieu (102) à mesurer par comparaison des deux taux de comptage de particules $N_1$ et $N_2$.

10. Agencement de mesure de niveau de remplissage (200, 500) selon l'une des revendications précédentes, dans lequel le premier détecteur à sélectivité directionnelle (201) présente deux scintillateurs disposés en parallèle ; dans lequel le deuxième détecteur à sélectivité directionnelle (202) présente deux scintillateurs disposés en parallèle ; et dans lequel l'électronique d'évaluation (460, 660) est conçue pour déterminer le niveau de remplissage ou la densité du milieu (102) dans le récipient (100) sur la base de la comparaison des deux taux de comptage $N_1$ et $N_2$.

11. Utilisation d'un agencement de mesure de niveau de remplissage (200, 500) conçu pour déterminer un niveau de remplissage ou une densité d'un milieu (102), comprenant :

un agencement de détection (510), conçu pour détecter un rayonnement cosmique secondaire incident et le convertir en signaux électriques ;
dans lequel l'agencement de détection (510) présente un premier et un deuxième détecteur à sélectivité directionnelle (201, 202, 715, 716) ;
dans lequel l'agencement de détection (510) est conçu pour détecter un premier taux de comptage de muons $N_1$ qui n'est pas influencé par le milieu à mesurer et sert de référence, et un deuxième taux de comptage de muons $N_2$ qui est influencé par le milieu à mesurer ;
une unité d'évaluation (625), conçue pour calculer le niveau de remplissage ou la densité du milieu (102) à partir du premier et du deuxième taux de comptage de particules, pour déterminer le degré de sédimentation d'un lac de retenue,
dans lequel l'agencement de mesure de niveau de remplissage est conçu pour déterminer la hauteur (H) de la couche de sédimentation (701) à partir des premier et deuxième taux de comptage de muons $N_1$ et $N_2$ déterminés par l'agencement de détection (510).

12. Utilisation d'un agencement de mesure de niveau de remplissage (200, 500) selon l'une des revendications 1 à 10 pour déterminer un niveau de remplissage ou une densité d'un milieu (102) dans un récipient (100), un lac de retenue, une halde ou un fleuve.

13. Utilisation d'un agencement de mesure de niveau de remplissage (200, 500) selon l'une des revendications 1 à 10 comme détecteur de seuil pour déterminer un niveau limite.

14. Procédé pour déterminer un niveau de remplissage ou une densité d'un milieu (102) contenu dans un récipient, le procédé présentant les étapes consistant à :

convertir le rayonnement cosmique incident en signaux électriques ;
détecter un premier taux de comptage de particules, qui n'est pas influencé par le milieu à mesurer et sert de référence, au moyen d'un premier détecteur à sélectivité directionnelle (201, 715) d'un agencement de détection (510) ;
détecter un deuxième taux de comptage de particules, qui est influencé par le milieu à mesurer, au moyen d'un deuxième détecteur à sélectivité directionnelle (202, 716) de l'agencement de détection (510) ;

déterminer le niveau de remplissage ou la densité du milieu (102) à partir du premier et du deuxième taux de comptage de particules ;

dans lequel les premier ou deuxième détecteurs à sélectivité directionnelle comprennent chacun une combinaison de plusieurs scintillateurs (411, 412, 413, 414, 611, 612, 613) ;

dans lequel les scintillateurs des premier et deuxième détecteurs à sélectivité directionnelle sont disposés dans l'espace de telle sorte que la détection du rayonnement est limitée à une certaine plage d'angles solides.

15. Élément de programme qui, lorsqu'il est exécuté sur un processeur d'un agencement de mesure de niveau de remplissage selon l'une des revendications 1 à 10, amène l'agencement de mesure de niveau de remplissage à mettre en œuvre les étapes du procédé selon la revendication 14.

16. Support lisible par ordinateur sur lequel est stocké un élément de programme selon la revendication 15.

Fig. 1

Fig. 2

Fig. 3

Fig. 4

Fig.5

EP 3 561 459 B1

Fig.6

Fig.7

Fig.8

Fig.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2011035151 A1
- US 2015279489 A1
- US 20150108349 A1

- US 20160170072 A1
- US 7945105 B1
- US 20150287237 A1